Europäisches Patentamt

European Patent Office

Office européen des brevets

(19)

(11) Numéro de publication : **0 508 906 A1**

## (12) DEMANDE DE BREVET EUROPEEN

(21) Numéro de dépôt : **92401018.4**

(22) Date de dépôt : **10.04.92**

(51) Int. Cl.⁵ : **B65D 25/06, B62B 11/00**

(30) Priorité : **10.04.91 FR 9104370**

(43) Date de publication de la demande :
**14.10.92 Bulletin 92/42**

(84) Etats contractants désignés :
**BE CH DE GB LI**

(71) Demandeur : **LA POSTE, ETABLISSEMENT AUTONOME DE DROIT PUBLIC**
**20, Avenue de Ségur**
**F-75700 Paris (FR)**

(72) Inventeur : **Laugenie, Jean-Pierre**
**Bureau de Poste**
**F-24440 Montferrand du Perigord (FR)**

(74) Mandataire : **Armengaud, Alain et al**
**Cabinet ARMENGAUD AINE 3, Avenue Bugeaud**
**F-75116 Paris (FR)**

(54) **Conteneur de transport, notamment pour colis postaux.**

(57)   Conteneur de transport, notamment pour colis postaux, destiné à l'acheminement de produits ou objets fragiles pouvant se briser en cas de chocs excessifs ou encore susceptibles de se déformer sous l'effet de pressions locales.

Selon l'invention, ce conteneur se caractérisé en ce qu'il comporte une coque rigide externe (2), allongée, présentant une ouverture d'accès (6) de larges dimensions, fermée par un couvercle supérieur (7) pivotant et/ou éventuellement amovible, et enfermant un ensemble de calage (12) formant à l'intérieur de la coque des compartiments (14) voisins mais séparés, dont le volume peut être modifié de l'un à l'autre par aménagement relatif de la position de cloisons (13) délimitant ces compartiments, le centrage de l'ensemble de calage vis-à-vis des parois internes de la coque s'effectuant au moyen d'équerres d'entretoisement (17,18) dont la localisation et les dimensions sont ajustables, selon la position relative des cloisons.

FIG. 2

EP 0 508 906 A1

Jouve, 18, rue Saint-Denis, 75001 PARIS

La présente invention est relative à un conteneur, notamment pour colis postaux, plus particulièrement quoique non exclusivement destiné à enfermer des produits ou objets fragiles, pouvant se briser en cas de chocs excessifs ou encore susceptibles de se déformer ou de s'écraser sous l'effet de pressions locales, le conteneur étant agencé pour assurer une protection satisfaisante de tels produits, convenablement calés et immobilisés à l'intérieur du conteneur avant que celui-ci ne soit fermé, éventuellement scellé, puis acheminé vers son lieu de destination.

L'invention concerne notamment un conteneur du genre ci-dessus, en forme de sac rigide, pouvant être lui-même facilement transporté ou manipulé par un utilisateur.

On connaît déjà de nombreuses réalisations d'emballages ou conteneurs de formes, de structures et de dimensions diverses, pour le transport de produits fragiles ou déformables, notamment par la voie postale. Mais ces solutions connues ne permettent pas toujours d'assurer une protection satisfaisante pour un prix de revient de l'emballage acceptable par le consommateur, un tel emballage étant généralement non réutilisable et en conséquence jeté après avoir servi une seule fois.

La présente invention se rapporte à un conteneur qui tend à éviter ces inconvénients au moyen d'un ensemble de structure particulière, assurant une protection maximale des produits à expédier, en permettant par ailleurs, du fait de ses dimensions relativement importantes, des envois groupés, le conteneur pouvant ensuite être aisément réutilisé, soit par le consommateur s'il en a acquis la propriété, soit par les Services de la Poste dans la mesure où ces conteneurs sont mis à la disposition des utilisateurs avant qu'ils ne soient récupérés après acheminement et distribution des produits qu'ils contiennent.

Selon l'invention, le conteneur considéré se caractérise en ce qu'il comporte une coque externe rigide ou semi-rigide, allongée, présentant une ouverture d'accès de larges dimensions, fermée par un couvercle supérieur pivotant et/ou éventuellement amovible, et enfermant un ensemble de calage formant à l'intérieur de la coque des compartiments voisins mais séparés, dont le volume peut être modifié de l'un à l'autre par aménagement relatif de la position de cloisons délimitant ces compartiments, le centrage de l'ensemble de calage vis-à-vis des parois internes de la coque s'effectuant au moyen d'équerres d'entretoisement dont la localisation et les dimensions sont ajustables, selon la position relative des cloisons.

Selon une caractéristique particulière du conteneur, les cloisons de chaque compartiment, qui forment respectivement le socle et des parois latérales planes de celui-ci, ainsi qu'éventuellement le dessus du compartiment, présentent une structure de caillebotis, délimitant des ouvertures, de préférence à section carrée, et comportent sur leurs côtés des saillies de même section, de telle sorte que les ouvertures d'une première cloison puissent recevoir les saillies d'une seconde qui s'y emboîtent, en assurant le maintien mutuel de ces cloisons selon deux plans perpendiculaires.

Avantageusement, chaque cloison est constituée d'un plaque intermédiaire, en plastique rigide ou semi-rigide, associée sur chacune de ses deux faces à une couche de mousse plus souple de recouvrement, destinée à amortir les chocs de produits ou objets divers disposés dans le conteneur, à l'intérieur des compartiments de celui-ci.

Utilement, les deux couches de mousse sont collées sur la plaque intermédiaire. En outre et dans un mode de réalisation préféré de l'invention, la plaque intermédiaire de chaque cloison comporte des cadres creux, ménagés en relief sur chacune de ses faces, ces cadres, venus de fabrication, notamment par moulage avec la plaque, ou encore rapportés et solidarisés de celle-ci, pénétrant dans des logements de même section, prévus dans les couches de mousse de recouvrement, afin de solidariser ensemble la plaque et les couches.

De préférence, les équerres d'entretoisement comportent des saillies analogues à celles des cloisons pour permettre leur immobilisation sur celles-ci dans les positions choisies par rapport aux cloisons et à la paroi interne de la coque.

Selon d'autres caractéristiques avantageuses, la coque est réalisée en matière plastique, éventuellement armée de fibres de verre noyées dans une résine polyester injectée, tout autre matériau thermo-durcissable ou thermo-plastique pouvant être envisagé selon diverses variantes et quel que soit le procédé de fabrication utilisé.

Le couvercle de fermeture est de préférence doublé vers l'intérieur de la coque d'un matelas de mousse élastique collé, du genre mousse de polyuréthane ou autre. La coque comporte en partie frontale une poignée de préhension et, en partie postérieure sous la coque, un évidement en creux, jouant également le rôle de poignée, cet évidement étant ménagé entre des roulettes, de préférence au nombre de deux, situées sur les côtés et à la partie inférieure de la coque pour permettre de déplacer celle-ci sur le sol en étant tenue et tirée par la poignée de préhension prévue dans la partie frontale.

Selon encore une autre caractéristique, le couvercle de fermeture, disposé à la partie supérieure de la coque, comporte une gorge longitudinale en creux, la coque présentant sous son fond inférieur une bande ou plaque en relief, dont la largeur et l'épaisseur sont sensiblement égales à la largeur et la profondeur de la gorge de telle sorte que deux coques successives, empilées l'une sur l'autre, soient immobilisées mutuellement du fait de l'engagement de la plaque de la coque supérieure dans la gorge de la coque inférieure.

De préférence également, chaque plaque en relief comporte des patins en un matériau à fort coefficient de frottement, en caoutchouc ou en plastique, aptes à freiner la coque en cas de glissement sur le sol.

Selon une autre caractéristique, le couvercle de fermeture comporte des charnières ouvertes, coopérant avec des tiges d'articulation transversales, portées par la coque dans le côté de l'ouverture d'accès à l'intérieur de la coque, le couvercle se rabattant sur celle-ci en venant couvrir et fermer l'ouverture. Avantageusement enfin, le couvercle comporte sur sa périphérie des clips de fermeture, venant s'accoupler avec des tenons de blocage fixés sur la coque selon le bord de l'ouverture d'accès.

D'autres caractéristiques d'un conteneur de transport établi conformément à l'invention, apparaîtront encore à travers la description qui suit d'un exemple de réalisation, donné à titre indicatif et non limitatif, en référence aux dessins annexés sur lesquels :

– La Figure 1 est une vue en perspective du conteneur considéré, avec son couvercle de fermeture mis en place.

– La Figure 2 est une vue, également en perspective, du conteneur de la Figure 1, avec son couvercle illustré en position séparée, permettant de d'apercevoir l'ensemble de calage monté à l'intérieur de la coque, dont les cloisons délimitent des compartiments voisins, destinés à recevoir les produits ou objets à transporter.

– La Figure 3 est une vue en coupe longitudinale à plus grande échelle, avec perspective partielle du conteneur selon les Figures 1 et 2.

– La Figure 4 est une vue partielle à plus grande échelle de l'ensemble de calage monté à l'intérieur du conteneur.

– La Figure 5 est une vue de détail, en perspective éclatée, illustrant la structure des cloisons de l'ensemble de calage.

– La Figure 6 est une vue de l'arrière de deux conteneurs, permettant de mieux voir la manière dont ceux-ci peuvent être empilés l'un sur l'autre.

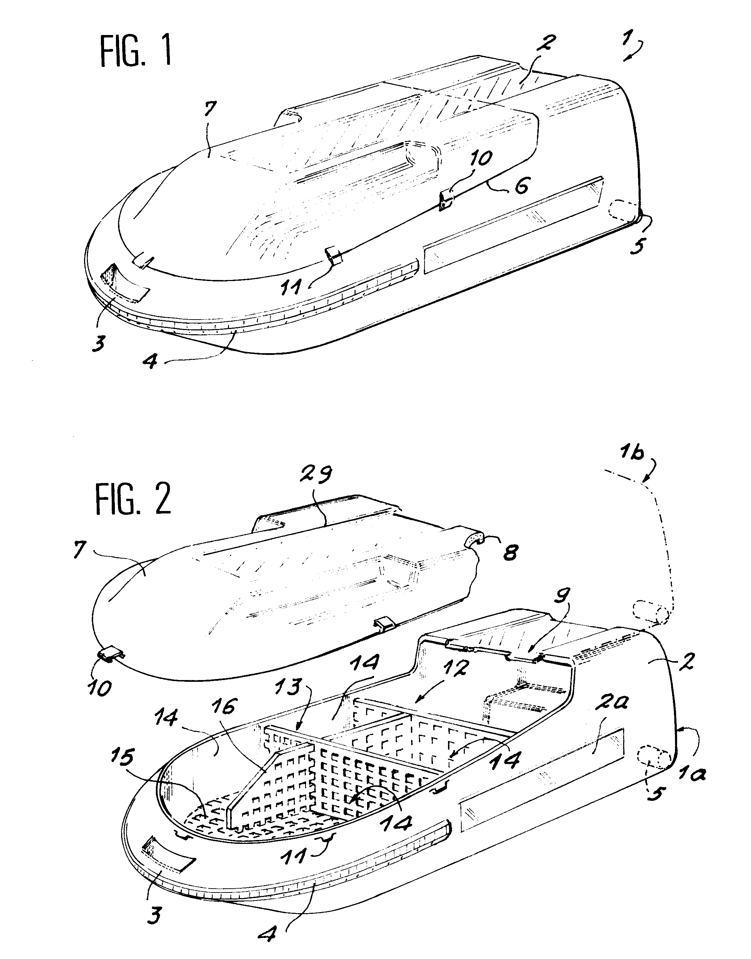

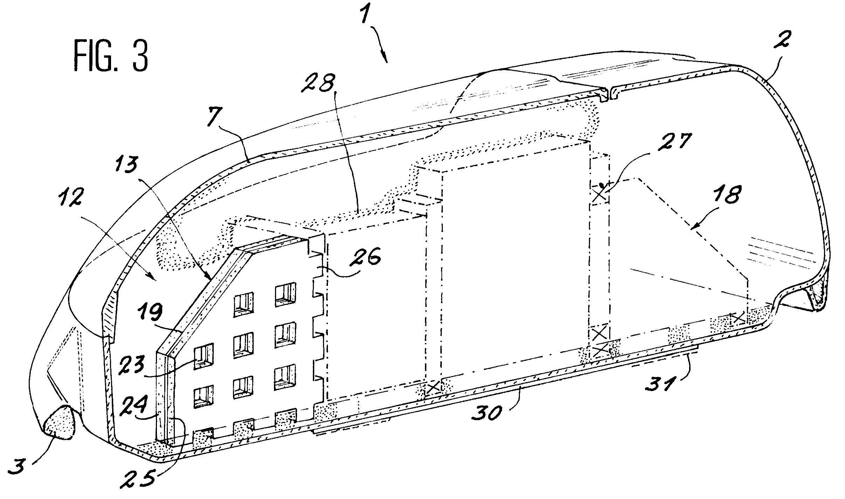

Comme on le voit sur les Figures 1 à 3 notamment, le conteneur considéré, désigné dans son ensemble sous la référence 1, se compose principalement d'une coque 2 de forme générale allongée et dont les dimensions, dans l'exemple représenté, sont de l'ordre de 101 cm en longueur, pour une largeur de 49 cm et une hauteur de 34 cm, ces valeurs n'ayant par elles-mêmes aucun caractère nécessaire, le conteneur pouvant naturellement être réalisé avec des dimensions différentes. La coque 2 présente ainsi un profil général approximativement parallélépipédique mais est avantageusement adoucie dans ses arêtes et conformée de façon arrondie dans sa partie frontale, qui comporte utilement une poignée de préhension 3, plus explicitement représenté sur la Figure 3, ainsi qu'une bande latérale 4 de protection, en caoutchouc ou autre matériau analogue, présentant une relative souplesse et formant pare-chocs à l'avant de la coque. Eventuellement peut être disposée sur la paroi de la coque une étiquette 2a ou analogue, pour permettre de porter sur celle-ci des indications concernant le contenu, la destination du conteneur, ou encore d'autres informations.

De préférence, la coque 2 est réalisée en un matériau à la fois rigide mais de poids relativement limité. Une solution avantageuse mais qui n'a en elle-même aucun caractère impératif, consiste à cet effet à constituer la coque au moyen de fibres de verre, noyées dans une résine durcie, notamment du type résine polyester ou autre, l'ensemble étant de préférence réalisé par moulage ou injection selon une technique bien connue dans la pratique du formage de tels matériaux. En variante, on peut également prévoir de constituer la coque en un matériau thermo-plastique durci, par thermo-formage, extrusion, soufflage, moulage rotatif etc...

A l'arrière et dans sa partie inférieure, la coque 2 comporte utilement deux roulettes 5, à axe horizontal, disposées respectivement de chaque côté de la coque afin de permettre de déplacer facilement cette dernière sur le sol contre lequel s'appuient les roulettes, la coque étant saisie et soulevée par la poignée 3. La coque présente également entre les roulettes 5 un évidement en creux 2a qui permet à un utilisateur de la soulever, par exemple en la saisissant respectivement par la poignée et l'évidement.

La coque 2 comporte dans sa partie supérieure une large ouverture d'accès 6, fermée par un couvercle 7 qui vient s'appliquer contre le bord de l'ouverture 6, comme représenté sur la Figure 1. A l'arrière, le couvercle 7 comporte un retour 8, formant charnière ouverte et propre à coopérer avec des tiges transversales 9, portées par la coque 2 au droit de l'ouverture 6, afin de permettre d'articuler le couvercle 7 sur la coque en permettant son pivotement autour des tiges 9, ou encore de le retirer complètement, comme représenté sur la Figure 2. A sa périphérie, le couvercle 7 comporte des clips de fermeture 10, aptes à venir coopérer avec des tenons de blocage 11, prévus sur le bord de l'ouverture 6, afin d'immobiliser le couvercle sur la coque en position de fermeture de cette dernière. Ces clips peuvent être aménagés pour recevoir un moyen de scellement approprié, le cas échéant est muni d'un dispositif de verrou à code de fermeture.

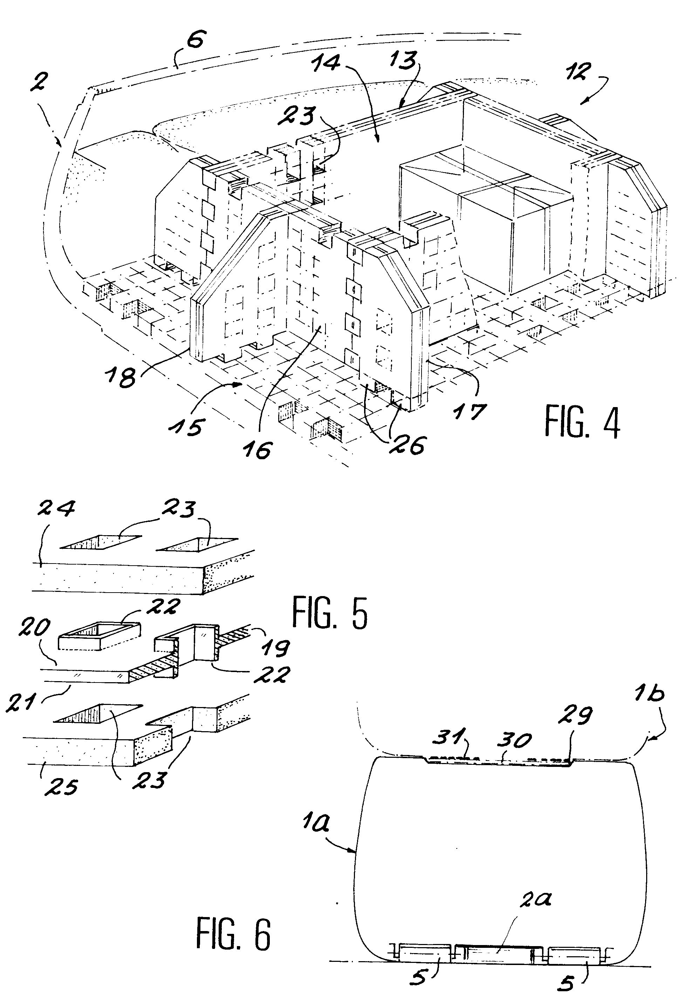

Les Figures 2 et 4 illustrent avec plus de détails la structure interne de la coque 2 et des moyens pour maintenir dans celle-ci des produits ou objets à transporter.

La coque est ainsi associée à un ensemble de calage 12, constitué par un ensemble de cloisons 13, délimitant à l'intérieur de la coque une série de compartiments voisins et séparés 14, à l'intérieur desquels sont placés les objets à transporter. Chacun de ces compartiments comporte un socle 15 et des parois latérales 16, dont la répartition à l'intérieur du conteneur peut être variable et adaptée à chaque cas particulier selon les dimensions, la nature et l'encombrement des divers objets placés dans les compartiments 14.

L'ensemble de calage 12 est centré et immobilisé à l'intérieur de la coque 2 au moyen d'équerres, respectivement telles que 17 et 18, montées latéralement, à l'avant ou à l'arrière de l'ensemble 12 pour bloquer celui-ci en position dans la coque, en s'appuyant mutuellement contre les cloisons 13 correspondantes et la paroi interne de la coque, en regard de ces cloisons. Une plaque de calage (non représentée) peut être également prévue sur le dessus des compartiments sous le couvercle, de telle sorte que, à la fermeture de celui-ci, les compartiments soient convenablement fermés et les objets ou produits placés dans ceux-ci bien immobilisés.

Chaque cloison 13 est constituée, comme plus spécialement représenté sur la Figure 5, au moyen d'une plaque intermédiaire mince 19, en matière plastique rigide, par exemple en "PVC", comportant sur l'une et l'autre de ces deux faces parallèles, respectivement 20 et 21, des cadres creux en saillie 22, présentant notamment une section droite carrée, ces cadres étant prévus pour coopérer avec des logements de même profil 23, réalisés à travers des couches de mousse plastique 24 et 25, venant ainsi s'appliquer contre les faces 20 et 21 de la plaque intermédiaire 19 correspondante en prenant celle-ci en sandwich. De préférence, les couches de mousse 24 et 25 sont collées contre la plaque intermédiaire 19 pour constituer ensemble une cloison composite, alliant à une rigidité convenable dans son plan, une souplesse appréciable dans ses parois, de telle sorte que les produits ou objets placés dans le conteneur à l'intérieur du volume des compartiments 14, soient convenablement immobilisés dans ceux-ci ou encore, en cas de chocs lors du transport, soient amortis au contact de ces parois contre les couches de mousse 24 et 25 qu'elles comportent.

Les cloisons 13 présentent ainsi des passages au travers de leur épaisseur, constitués par les logements 23 et cadres en saillie 22. De préférence, ces passages ont une section carrée et sont prévus pour recevoir des tenons en saillie 26, prévus dans les bords latéraux des cloisons 13 ou encore des tenons 27, de même profil, ménagés sur les côtés des équerres d'immobilisation 17 et 18. Les cloisons 13 forment ainsi un caillebotis, à travers les logements desquels s'engagent les tenons d'autres cloisons ou des équerres pour constituer l'ensemble 12, dont la configuration peut être déterminée au gré de l'usager, notamment avec une répartition et un nombre des compartiments 14 choisis à volonté comme déjà précisé, selon la taille et la nature des produits ou objets à loger dans ces compartiments et à transporter. Dans l'exemple représenté, les cloisons comportent une plaque intermédiaire 19 d'environ 5 mm d'épaisseur, les couches de mousse 24 et 25 appliquées sur ses faces 20 et 21, présentant pour leur part une épaisseur d'environ 2 cm.

Avantageusement, les compartiments 14 ainsi ménagés dans l'ensemble de calage 12 sont obturés à leur extrémité supérieure au moyen d'un matelas souple 28, collé sous le couvercle de fermeture 7, ce matelas étant de préférence constitué par une épaisseur appropriée d'un matériau plastique, sensiblement élastique, notamment une mousse de polyuréthane, permettant avec la plaque de calage prévue sous le couvercle d'accommoder les variations de hauteur respective des divers compartiments et de fermer uniformément ceux-ci, ainsi que le schématise la vue en coupe de la Figure 3, en exerçant une pression appropriée sur les objets placés dans les compartiments.

La Figure 6 illustre une autre disposition utilement mise en oeuvre dans le conteneur considéré, permettant de réaliser l'empilement ou le gerbage de plusieurs conteneurs successifs et identiques tels que 1a, 1b etc..., en les immobilisant de l'un à l'autre dans la pile ainsi formée, en particulier pour le stockage de ces conteneurs ou leur groupement lors de leur transport. A cet effet, le couvercle 7 de chaque conteneur 1 comporte dans sa face supérieure et dans région médiane, une gorge longitudinale en creux 29 dont la largeur et la profondeur sont déterminées de manière à correspondre à celle d'une plaque en relief 30 prévue sous le fond de la coque 2 d'un autre conteneur venant se placer par-dessus le précédent avec son couvercle 7 en place, de telle sorte que, par coopération de la plaque de l'un situé au-dessus dans la gorge de l'autre situé en-dessous, les deux conteneurs s'immobilisent respectivement l'un par rapport à l'autre en position relative appropriée. Avantageusement, la plaque 30 est munie à sa surface inférieure de patins 31, en caoutchouc ou autre matériau à coefficient de frottement élevé, de manière à améliorer l'immobilisation des conteneurs les uns par rapport aux autres et également à éviter que chacun d'eux, lorsqu'il repose sur le sol, ne glisse inconsidérément, le transport s'effectuant comme déjà précisé, en soulevant le conteneur par sa poignée frontale 3 et en le faisant se déplacer sur les roulettes 5 montées à son extrémité basse opposée. Dans le conteneur représenté, la gorge présente une largeur d'environ 25 cm et une profondeur de l'ordre de 5 mm.

On réalise ainsi un conteneur de transport de conception très simple qui présente de nombreux avantages, en particulier du fait de la structure modulable de ses compartiments, qui peuvent être ainsi adaptés de façon immédiate à la nature et aux dimensions des produits transportés, ce conteneur pouvant également recevoir n'importe quel moyen de calage adapté à la forme de ces produits. La coque peut être réalisée en tous matériaux rigides ou semi-rigides appropriés, assurant une protection optimale de ces produits qui sont isolés dans leurs compartiments vis-à-vis des chocs ou pressions susceptibles de s'exercer au cours de leur transport. La possibilité d'empiler les conteneurs permet par ailleurs de réduire leur encombrement à l'occasion d'envois groupés, en facilitant leur manutention par tout système à palettes classique.

Bien entendu, il va de soi que l'invention ne se limite pas à l'exemple de réalisation plus spécialement décrit et représenté sur les dessins annexés ; elle en embrasse au contraire toutes les variantes.

## Revendications

1 - Conteneur de transport, notamment pour colis postaux, caractérisé en ce qu'il comporte une coque rigide externe (2), allongée, présentant une ouverture d'accès (6) de larges dimensions, fermée par un couvercle supérieur (7) pivotant et/ou éventuellement amovible, et enfermant un ensemble de calage (12) formant à l'intérieur de la coque des compartiments (14) voisins mais séparés, dont le volume peut être modifié de l'un à l'autre par aménagement relatif de la position de cloisons (13) délimitant ces compartiments, le centrage de l'ensemble de calage vis-à-vis des parois internes de la coque s'effectuant au moyen d'équerres d'entretoisement (17,18) dont la localisation et les dimensions sont ajustables, selon la position relative des cloisons.

2 - Conteneur de transport selon la revendication 1, caractérisé en ce que les cloisons (13) de chaque compartiment (14), qui forment respectivement le socle (15) et des parois latérales planes (16) de celui-ci, présentent une structure de caillebotis, délimitant des ouvertures (23), de préférence à section carrée, et comportent sur leurs côtés des saillies (26) de même section, de telle sorte que les ouvertures d'une première cloison puissent recevoir les saillies d'une seconde qui s'y emboîtent, en assurant le maintien mutuel de ces cloisons selon deux plans perpendiculaires.

3 - Conteneur de transport selon l'une des revendications 1 ou 2, caractérisé en ce que chaque cloison (13) est constituée d'une plaque intermédiaire (19), en plastique rigide ou semi-rigide, associée sur chacune de ses deux faces à une couche de mousse plus souple de recouvrement (24,25), destinée à amortir les chocs de produits ou objets divers disposés dans le conteneur, à l'intérieur des compartiments (14) de celui-ci.

4 - Conteneur de transport selon la revendication 3, caractérisé en ce que les deux couches de mousse (24,25) sont collées sur la plaque intermédiaire (19).

5 - Conteneur de transport selon l'une des revendications 3 ou 4, caractérisé en ce que la plaque intermédiaire (19) de chaque cloison (13) comporte des cadres creux (22), ménagés en relief sur chacune de ses faces, ces cadres, venus de fabrication, notamment par moulage avec la plaque, ou encore rapportés et solidarisés de celle-ci, pénétrant dans des logements (23) de même section, prévus dans les couches de mousse de recouvrement (24,25), afin de solidariser ensemble la plaque et les couches.

6 - Conteneur de transport selon l'une quelconque des revendications 1 à 5, caractérisé en ce que les équerres d'entretoisement (17,18) comportent des saillies (27) analogues à celles des cloisons pour permettre leur immobilisation sur celles-ci dans les positions choisies par rapport aux cloisons et à la paroi interne de la coque.

7 - Conteneur de transport selon l'une quelconque des revendications 1 à 6, caractérisé en ce que la coque (2) est réalisée en une matière plastique appropriée, éventuellement armée de fibres de verre noyées dans une résine polyester injectée.

8 - Conteneur de transport selon l'une quelconque des revendications 1 à 7, caractérisé en ce que le couvercle de fermeture (7) est doublé vers l'intérieur de la coque d'un matelas de mousse élastique collé (28), du genre mousse de polyuréthane ou autre.

9 - Conteneur de transport selon l'une quelconque des revendications 1 à 8, caractérisé en ce que la coque (2) comporte en partie frontale une poignée de préhension (3) et en partie postérieure des roulettes (5), de préférence au nombre de deux, situées sur les côtés et à la partie inférieure de la coque pour permettre de déplacer celle-ci sur le sol en étant tenue et tirée par la poignée.

10 - Conteneur de transport selon la revendication 9, caractérisé en ce que la coque comporte entre les roulettes (5), un évidement en creux (2a) pour permettre de soulever la coque en la tenant entre cet évidement et la poignée (3).

11 - Conteneur de transport selon l'une quelconque des revendications 1 à 10, caractérisé en ce que le couvercle de fermeture (7), disposé à la partie supérieure de la coque (2), comporte une gorge longitudinale en creux (30), la coque présentant sous son fond inférieur une bande ou plaque en relief (31), dont la largeur et l'épaisseur sont sensiblement égales à la largeur et la profondeur de la gorge de telle sorte que deux coques successives, empilées l'une sur l'autre, soient immobilisées mutuellement du fait de l'engagement de la plaque de la coque supérieure dans la gorge de la coque inférieure.

12 - Conteneur de transport selon la revendication 11, caractérisé en ce que chaque plaque en relief (30) comporte des patins (31) en un matériau à fort coefficient de frottement, en caoutchouc ou en plastique, aptes à freiner la coque en cas de glissement sur le sol.

**13** - Conteneur de transport selon l'une quelconque des revendications 1 à 12, caractérisé en ce que le couvercle (7) de fermeture comporte des charnières ouvertes (8), coopérant avec des tiges d'articulation transversales (9), portées par la coque dans le côté de l'ouverture d'accès (6) à l'intérieur de la coque, le couvercle se rabattant sur celle-ci en venant couvrir et fermer l'ouverture.

**14** - Conteneur de transport selon la revendication 13, caractérisé en ce que le couvercle (7) comporte sur sa périphérie des clips de fermeture (10), venant s'accoupler avec des tenons de blocage (11) fixés sur la coque (2) selon le bord de l'ouverture d'accès (6).

**15** - Conteneur de transport selon la revendication 14, caractérisé en ce que les clips de fermeture (10) sont associés à un moyen de scellement ou à un dispositif de verrouillage à code.

EP 0 508 906 A1

FIG. 1

FIG. 2

FIG. 3

EP 0 508 906 A1

FIG. 4

FIG. 5

FIG. 6

# EP 0 508 906 A1

**Office européen des brevets**

## RAPPORT DE RECHERCHE EUROPEENNE

Numero de la demande

EP    92 40 1018

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-2 562 686 (ALTEMUS)<br>* figures *<br>--- | 1 | B65D25/06<br>B62B11/00 |
| A | US-A-2 510 754 (NORLIN)<br>* figures *<br>--- | 1 | |
| A | US-A-4 093 101 (BRAUN)<br>* revendication 1; figures *<br>--- | 1 | |
| A | US-A-4 261 464 (MAITLAND)<br>* figures *<br>--- | 1 | |
| A | US-A-4 129 213 (FLEIG)<br>* abrégé; figures *<br><br>----- | 1 | |

**DOMAINES TECHNIQUES RECHERCHES (Int. Cl.5)**

B65D
B62B

Le présent rapport a été établi pour toutes les revendications

| Lieu de la recherche | Date d'achèvement de la recherche | Examinateur |
|---|---|---|
| LA HAYE | 15 JUIN 1992 | NEWELL P.G. |

EPO FORM 1503 03.82 (P0402)

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant